(19) Europäisches Patentamt / European Patent Office / Office européen des brevets

(11) **EP 3 056 851 B1**

(12) **EUROPEAN PATENT SPECIFICATION**

(45) Date of publication and mention
of the grant of the patent:
**17.06.2020 Bulletin 2020/25**

(51) Int Cl.:
*F28F 21/00* [(2006.01)]     *D21H 13/26* [(2006.01)]
*D21H 27/00* [(2006.01)]     *C09K 5/14* [(2006.01)]
*D21H 17/63* [(2006.01)]     *D21H 17/66* [(2006.01)]
*F28F 21/06* [(2006.01)]     *F28D 21/00* [(2006.01)]
*D21H 27/30* [(2006.01)]

(21) Application number: **14851374.0**

(22) Date of filing: **30.09.2014**

(86) International application number:
**PCT/JP2014/076025**

(87) International publication number:
**WO 2015/050104 (09.04.2015 Gazette 2015/14)**

(54) **BASE PAPER FOR HEAT EXCHANGER, AND TOTAL HEAT EXCHANGE ELEMENT USING SAME**

BASISPAPIER FÜR WÄRMETAUSCHER UND GESAMTWÄRMETAUSCHERELEMENT DAMIT

PAPIER DE BASE POUR ÉCHANGEUR DE CHALEUR, ET ÉLÉMENT D'ÉCHANGE DE CHALEUR TOTAL L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2013 JP 2013207463**

(43) Date of publication of application:
**17.08.2016 Bulletin 2016/33**

(73) Proprietor: **Toray Industries, Inc.**
**Tokyo 103-8666 (JP)**

(72) Inventors:
• **TAKEDA, Hiroki**
**Otsu-shi**
**Shiga 520-2141 (JP)**
• **FUJIYAMA, Tomomichi**
**Otsu-shi**
**Shiga 520-2141 (JP)**

• **OMORI, Taira**
**Otsu-shi**
**Shiga 520-2141 (JP)**
• **SODE, Katsuya**
**Otsu-shi**
**Shiga 520-2141 (JP)**

(74) Representative: **Hoefer & Partner Patentanwälte**
**mbB**
**Pilgersheimer Straße 20**
**81543 München (DE)**

(56) References cited:
EP-A1- 1 702 182      WO-A1-02/099193
WO-A1-2011/033624     GB-A- 1 268 646
JP-A- 2005 121 264    JP-A- 2010 248 680
JP-A- 2010 248 680    JP-A- 2011 012 893
JP-A- 2011 163 651    JP-A- 2013 167 408
US-A1- 2013 183 569   US-A1- 2013 233 529
US-B1- 6 379 836

EP 3 056 851 B1

**Description**

TECHNICAL FIELD

The present invention relates to base paper for heat exchange, and a total heat exchange element.

BACKGROUND ART

Heat exchange ventilating facilities, as leaders for energy saving, which ventilate air while exchanging the sensible heat (heat) and the latent heat (humidity) of the indoor/outdoor air, have been prevailing in residential buildings and medium-/small-sized buildings as well as large-sized buildings such as an office building and a factory.

A piece of heat exchange element base paper, which is used for a heat exchange element installed in a heat exchanger, is used as a partition member disposed between an air supply passage and an air exhaust passage, and is required to have gas shielding properties for preventing foul indoor air (return air) and fresh outside air (supply air) from being mixed with each other in the inside of the total heat exchange element, as well as a heat transfer property and water vapor transmission properties. By allowing these characteristics to be achieved at the same time, it is possible to provide a ventilating device capable of providing a comfortable environment where carbon dioxide and foul air including a bad smell in a room are exhausted therefrom while cooling/heating heat and humidity in the room are exchanged between the supply air and the exhaust air.

Patent Document 1 describes base paper for total heat exchange including cellulose pulp and thermoplastic nanofibers, and describes that high water vapor transmission properties can be achieved by taking advantage of the capillary phenomenon of nanofibers.

Patent Document 2 describes a partition member which is composed of hydrophilic fibers and includes a hygroscopic material, and a heat exchanger prepared with the partition member.

Moreover, Patent Document 3 describes that there can be provided a total heat exchange element in which air to be exhausted is not leaked into air to be supplied by using a sheet with a stacked structure prepared by overlapping a film or a coat layer of a resin on a porous material for a partition member of the total heat exchange element.

Patent Document 4 describes paper for a total heat exchanger in which moisture-absorbing/releasing property is enhanced, the elution of a flame retardant is prevented and mixing of two kinds of air to be exchanged is avoided as much as possible by providing one or two moisture-absorbing/releasing coating layers on one side or both sides of a sheet of substrate paper produced by mixing slurry formed mainly of fibers for papermaking with microfibrillated cellulose, hygroscopic powder and an optional heat-fusible substance and subjecting the mixture to papermaking, and an element for a total heat exchanger prepared therewith.

Patent Document 5 describes paper for a total heat exchange element which is allowed to have a transfer ratio of carbon dioxide of less than or equal to 1% by setting the beating degree of Schopper freeness of pulp to 40°SR and impregnating the pulp with a moisture absorbent and a flameproofing agent.

Patent Document 6 discloses a total heat exchanging element paper and a total heat exchanging element which are excellent in heat transferability, water vapor permeability and gas barrier properties and cause no mixing of supplied air and discharged air. Provided is a total heat exchanging element paper using a paper made using mainly a natural pulp beaten to a Canadian modification freeness of not more than 150 ml, a substantially non-porous total heat exchanging element paper comprising a substantially non-porous cellulosic base which contains a moisture absorbing agent, a non-porous total heat exchanging element paper having a high gas barrier property which has a thickness of not more than 100 $\mu$m and a carbon dioxide permeation constant specified in JIS K7126 of not more than $5.0 \times 10^{-13}$ mol·m/m$^2$·s·Pa, and a non-porous total heat exchanging element paper having a high enthalpy exchangeability which has a water vapor permeability specified in JIS Z0208 of not less than 1000 g/m$^2$·24 Hr at 20°C and 65% RH.

Patent document 7 also discloses a multi-layered total heat exchanging paper.

PRIOR ART DOCUMENTS

PATENT DOCUMENTS

Patent Document 1: Japanese Patent Laid-open Publication No. 2010-248680
Patent Document 2: Japanese Patent Laid-open Publication No. 2003-148892
Patent Document 3: Japanese Patent Laid-open Publication No. 7-190666
Patent Document 4: Japanese Patent Laid-open Publication No. 11-189999
Patent Document 5: Japanese Patent Laid-open Publication No. 2005-325473

# EP 3 056 851 B1

Patent Document 6: US 2013/233529 A1.
Patent Document 7: EP 1 702 182

## SUMMARY OF THE INVENTION

### PROBLEMS TO BE SOLVED BY THE INVENTION

Kinds of base paper for total heat exchange described in the above-mentioned documents have not been fully satisfactory in performance required hereafter such as high sheet strength, high water vapor transmission properties and high gas shielding properties.

Accordingly, an object of the present invention is to provide base paper for total heat exchange excellent in sheet strength, water vapor transmission properties and gas shielding properties, and a total heat exchange element.

### SOLUTIONS TO THE PROBLEMS

The heat exchange element according to the present invention for solving the above-mentioned problems takes the following configuration and is defined in the appended claims.

(1) Base paper for heat exchange including at least one layer of a first layer containing greater than or equal to 90% by mass of cellulose pulp with a Canadian standard freeness specified in JIS P8121 (1995) of 10 to 100 ml and at least one layer of a second layer having a fibrous substance comprising cellulose pulp with a Canadian standard freeness specified in JIS P8121 (1995) of 400 to 700 ml, and having a stacked structure thereof, wherein the first layer has a basis weight of 15 to 40 g/m$^2$, the second layer has a basis weight of 5 to 20 g/m$^2$, and the second layer includes nanofibers of a thermoplastic polymer in an amount of 30 to 80% by mass based on the second layer. Moreover, in this context, the embodiment of the base paper for heat exchange takes any one of the following configurations.

(2) Any of kinds of the base paper for heat exchange wherein the carbon dioxide shielding rate of the base paper for heat exchange is greater than or equal to 35%.

(3) Any of kinds of the base paper for heat exchange wherein the second layer is a porous layer.

(4) The base paper for heat exchange wherein the main component of the thermoplastic polymer constituting nanofibers is a polyamide.

(5) Any of kinds of the base paper for heat exchange wherein the content ratio of nanofibers of a thermoplastic polymer existing in the second layer to the base paper for heat exchange is 0.5 to 65% by mass.

(6) Any of kinds of the base paper for heat exchange further including a moisture absorbent.

(7) Any of kinds of the base paper for heat exchange wherein the basis weight of the base paper for heat exchange is 20 to 90 g/m$^2$.

(8) Any of kinds of the base paper for heat exchange wherein the water vapor permeability of the base paper for heat exchange is greater than or equal to 80 g/m$^2$/hr.

(9) Any of kinds of the base paper for a heat exchange element wherein second layers exist in respective directions of both faces of the first layer.
And then, as ones prepared with any of kinds of the base paper for heat exchange mentioned above, there is the following configuration.

(10) A total heat exchange element prepared by stacking pieces of the corrugated cardboard for a total heat exchange element.

### EFFECTS OF THE INVENTION

According to the present invention, it is possible to provide base paper for heat exchange excellent in sheet strength, water vapor transmission properties and gas shielding properties, and a total heat exchange element.

EMBODIMENTS OF THE INVENTION

Hereinafter, an embodiment for carrying out the invention will be described. In this connection, the term "a main component" is used here, and when the term "a main component" is defined, it means a component contained in an amount greater than 50% by mass, preferably greater than or equal to 70% by mass and further preferably greater than or equal to 90% by mass.

Base paper for heat exchange according to the present invention has a stacked structure essentially including a first layer and a second layer. By adopting such a stacked structural body, in the base paper for heat exchange, the first layer can shield foul components in indoor air such as carbon dioxide and ammonia and the second layer can enhance the moisture transmission properties. Consequently, it is possible to obtain base paper for heat exchange achieving both high gas shielding properties and high water vapor transmission properties. Moreover, by the presence of the first layer, there is a tendency for the strength of a sheet which is required at the time of the formation of a total heat exchange element to be lowered, but the second layer can compensate for the sheet strength. Consequently, without necessarily adding a paper strengthening agent, it is possible to impart sheet strength required at the time of the formation of a total heat exchange element to base paper for heat exchange.

The first layer in the present invention is composed mainly of a fibrous substance and contains greater than or equal to 90% by mass of cellulose pulp. Examples of the fibrous substance include N pulp (softwood pulp), L pulp (hardwood pulp), bagasse, wheat straw, reeds, papyrus, bamboo, wood wool, kenaf, roselle, cannabis, flax, ramie, jute, hemp, Sisal hemp, Manila hemp, palm, banana, thermoplastic resin fibers (fibers composed of thermoplastic resins such as polyethylene terephthalate (PET), polytrimethylene terephthalate (PTT), polybutylene terephthalate (PBT), polylactic acid (PLA), polyethylene naphthalate (PEN), a liquid crystal polyester, nylon 6 (N6), nylon 66 (N66), nylon 11 (N11), nylon 12 (N12), polyethylene (PE), polypropylene (PP) and polystyrene (PS)), regenerated fibers (viscose rayon, cuprammonium rayon) and the like. These fibers may be used alone, but two or more kinds of fibers selected therefrom may be included. Since fibrillated fibers easily form a dense structural body that effectively shields the leakage of carbon dioxide from the voids between fibers, it is preferred that the first layer be composed mainly of a hydrophilic fibrous substance highly fibrillated. Moreover, examples of the hydrophilic fibrous substance highly fibrillated include N pulp (softwood pulp), L pulp (hardwood pulp), aramid fibers, acrylic fibers and the like. Moreover, these fibers may be used alone, but two or more kinds of fibers selected therefrom may be included. As the first layer, further preferably used is one prepared by highly fibrillating cellulose pulp such as N pulp (softwood pulp) and L pulp (hardwood pulp). By using the fibrillated cellulose pulp, papermaking properties are improved, and the first layer can be more firmly formed by the interaction between cellulose molecules attributed to hydrogen bonding. Although the cellulose pulp used in the present invention is not limited, N pulp (softwood pulp), L pulp (hardwood pulp) and the like obtained from plants such as wood can be used alone or two or more kinds thereof can be used in combination. These hydrophilic fibers capable of being fibrillated can be fibrillated by means of a beater, a disc refiner, a deluxe finer, a jordan refiner, a grinder, a bead mill or a high-pressure homogenizer.

The fibrous substance as a main component of the first layer has a Canadian standard freeness specified in JIS P8121 (1995) of 10 to 100 ml. By allowing the first layer to be composed mainly of a fibrous substance with a Canadian standard freeness of 10 to 100 ml, it is possible to make voids between fibrous substances in the first layer fine by virtue of fibrillated fibrous substances. When the Canadian standard freeness is low, the first layer can be made into a dense layer in which voids between fibrous substances are made fine, and the first layer can be made into one that exerts high gas shielding properties. Because of being capable of further enhancing the gas shielding properties of the first layer, the Canadian standard freeness of the fibrous substance is less than or equal to 100 ml, preferably less than or equal to 90 ml and especially preferably less than or equal to 30 ml. Moreover, although no particular limitation is put on the lower limit of the Canadian standard freeness of the fibrous substance, from the viewpoint of being capable of enhancing the water vapor transmission properties of base paper for heat exchange at the time of obtaining the base paper for heat exchange by allowing voids between fibrous substances in the first layer to remain to some extent and from the viewpoint of the enhancement in production efficiency on papermaking for the first layer, the Canadian standard freeness of the fibrous substance is greater than or equal to 10 ml.

The basis weight of the first layer is greater than or equal to 15 $g/m^2$, preferably greater than or equal to 20 $g/m^2$ and further preferably greater than or equal to 25 $g/m^2$. On the other hand, the basis weight is less than or equal to 40 $g/m^2$ and preferably less than or equal to 35 $g/m^2$. By allowing the basis weight to be greater than or equal to 15 $g/m^2$, it is possible to impart high carbon dioxide shielding properties, for example, a shielding rate of greater than or equal to 35% to the first layer. In this context, the shielding rate of carbon dioxide can serve as an index of gas shielding properties. The first layer having a high carbon dioxide shielding rate exerts high gas shielding properties. On the other hand, by allowing the basis weight to be less than or equal to 40 $g/m^2$, it is possible to enhance the water vapor transmission properties and heat conductivity of base paper for heat exchange at the time of obtaining the base paper for heat exchange.

In the base paper for heat exchange according to the present invention, the basis weight of the first layer is 15

to 40 g/m$^2$ and the basis weight of the second layer falls within the range of 5 to 20 g/m$^2$. By allowing the basis weight of the first layer and the basis weight of the second layer to fall within the above-mentioned ranges respectively, it is possible to obtain base paper for heat exchange further excellent in all of sheet strength, water vapor permeability, gas shielding properties and heat conductivity.

It is preferred that the first layer have high gas shielding properties, and the carbon dioxide shielding rate is preferably greater than or equal to 35%. The carbon dioxide shielding rate is more preferably greater than or equal to 60% and further preferably greater than or equal to 70%. When the carbon dioxide shielding rate is low, even at the time of being made into a total heat exchange element, there is a tendency that leakage of carbon dioxide from base paper for heat exchange becomes significant and there is a tendency that the effective ventilation volume rate required as the element is lowered. By allowing the carbon dioxide shielding rate to be greater than or equal to 60%, the leakage of carbon dioxide through base paper for heat exchange is significantly shielded, and furthermore, by allowing the carbon dioxide shielding rate to be greater than or equal to 70%, the leakage of carbon dioxide is further significantly shielded. Consequently, the re-inflow of foul components from air to be exhausted is inhibited, and the heat exchange apparatus can perform ventilation efficiently.

The second layer in the present invention contains a fibrous substance comprising cellulose pulp. Examples of the fibrous substance include N pulp (softwood pulp), L pulp (hardwood pulp), bagasse, wheat straw, reeds, papyrus, bamboo, wood wool, kenaf, roselle, cannabis, flax, ramie, jute, hemp, Sisal hemp, Manila hemp, palm, banana, thermoplastic resin fibers (fibers composed of thermoplastic resins such as polyethylene terephthalate (PET), polytrimethylene terephthalate (PTT), polybutylene terephthalate (PBT), polylactic acid (PLA), polyethylene naphthalate (PEN), a liquid crystal polyester, nylon 6 (N6), nylon 66 (N66), nylon 11 (N11), nylon 12 (N12), polyethylene (PE), polypropylene (PP) and polystyrene (PS)), regenerated fibers (viscose rayon, cuprammonium rayon) and the like. These fibers may be used alone, but two or more kinds of fibers selected therefrom may be included. The nanofiber with a fiber diameter of less than 1000 nm composed of a thermoplastic resin is defined below, but by definition, this is not included in the "fibrous substance" contained in this second layer.

Examples of the fibrous substance preferably include cellulose pulp such as N pulp (softwood pulp) and L pulp (hardwood pulp) because the pulp is easily handled as fibers for papermaking and is excellent in papermaking properties.

These fibers can be moderately fibrillated by using a beater, a disc refiner, a deluxe finer, a jordan refiner, a grinder, a bead mill, a high-pressure homogenizer and the like.

The Canadian standard freeness of a fibrous substance contained in the second layer is 400 to 700 ml. When the Canadian standard freeness of a fibrous substance is less than 400 ml, voids between fibrous substances cannot be sufficiently formed in the second layer, and high water vapor transmission properties cannot be exerted when base paper for heat exchange is obtained. In the case where voids between fibrous substances cannot be sufficiently formed in the second layer, the reason why high water vapor transmission properties cannot be exerted when base paper for heat exchange is obtained is because the moisture movement in the layer is restricted only to condensation and diffusion and the moisture mobility becomes small when the voids in the second layer are excessively made minute. Moreover, when the Canadian standard freeness of a fibrous substance in the second layer is less than 400 ml, the degree of paper in a wet state is lowered by microfibrous pulp and the resulting base paper for heat exchange is made into one poor in processability. Moreover, with regard to the upper limit, as described below, in the case where nanofibers are contained, from the viewpoint of suppressing dropping-off of the nanofibers from voids between fibrous substances at the time of papermaking, the Canadian standard freeness is less than or equal to 700 ml.

The second layer also includes nanofibers of a thermoplastic polymer apart from the above-mentioned fibrous substance in the second layer.

In this context, the nanofiber means the fiber having a fiber diameter at a nanometer (nm) level, a so-called nanosized diameter, and specifically, refers to the fiber with a fiber diameter of greater than or equal to 1 nm and less than 1000 nm. In this connection, in the case where the fiber cross-section is a modified cross-section, which is not a circular cross-section, the fiber diameter is based on a fiber diameter calculated when the sectional shape is converted into a circular shape with the same area.

From the viewpoint of capillary phenomenon acceleration, it is preferred that the fiber diameter of the nanofiber usable for a preferred embodiment be less than or equal to 750 nm, and the fiber diameter is more preferably less than or equal to 500 nm and further preferably less than or equal to 300 nm. Moreover, in view of balance with productivity, it is preferred that the fiber diameter be greater than or equal to 1 nm. The fiber diameter is more preferably greater than or equal to 100 nm. The nanofiber is composed of a thermoplastic polymer, and examples of the thermoplastic polymer include, with regard to the main component, a polyester, a polyamide, a polyolefin and the like. Examples of the polyester also include a liquid crystal polyester and the like, as well as polyethylene terephthalate (PET), polytrimethylene terephthalate (PTT), polybutylene terephthalate (PBT), polylactic acid (PLA), polyethylene naphthalate (PEN) and the like. Moreover, examples of the polyamide include nylon 6 (N6), nylon 66 (N66), nylon 11 (N11), nylon 12 (N12) and the like. Examples of the polyolefin include polyethylene (PE), polypropylene (PP), polystyrene (PS) and the like. Of these polymers, from the viewpoints of easily absorbing water and the affinity with cellulose pulp in the case where the fibrous substance is cellulose pulp, a polyamide is preferred and nylon 6 is especially preferred. Moreover, it does not matter if a component other than the polyamide is allowed to undergo a copolymerization together with the thermoplastic polymer or is mixed therewith.

In this connection, for example, the nanofiber can be produced by a method described in JP-A-2005-299069 (paragraphs [0045] to [0057], paragraphs [0114] to [0117] and the like) or the like. Specifically, the method is as follows.

First, a production method of "polymer alloy fibers" as raw material for preparing nanofibers will be described. As the production method of polymer alloy fibers, for example, the following method can be adopted. That is, two or more kinds of polymers different from one another in solubility against a solvent or a chemical liquid are alloyed to prepare polymer alloy chips. The chips are charged into a hopper of a fiber spinning machine, made into an alloy melt in a melting section, discharged from a spinneret hole disposed at a spinneret pack in a heating or heat insulating spin block to be spun, and then, cooled and solidified by a chimney to be formed into a yarn thread. The yarn threads are allowed to pass through a collecting/oiling guide, a first haul-off roller and a second haul-off roller and wound with a winder to obtain a fiber. And then, this fiber is subjected to drawing or a heat treatment as necessary to obtain a polymer alloy fiber having a sea-island structure. Furthermore, this polymer alloy fiber is treated with a solvent or a chemical liquid and the sea component is removed to obtain a nanofiber used in the present invention. In this context, the polymer alloy fiber has an island component composed of a polymer hardly-soluble in a solvent or a chemical liquid, which constitutes a nanofiber later on, and a sea component composed of a polymer readily-soluble therein, and by controlling the size of this island component, it is possible to design the single-fiber number average fiber diameter of nanofibers and the variation thereof. Since the diameter of a nanofiber is almost decided by the size of the island component in the polymer alloy fiber which is a nanofiber precursor, the size distribution of islands is designed depending on the fiber diameter distribution of a desired nanofiber. As such, kneading polymers to be alloyed is of great importance, and in the present invention, it is preferred that polymers be highly kneaded by means of a kneading extruder, a stationary kneading extruder or the like.

Depending on the combination of a fibrous substance and a thermoplastic polymer nanofiber in the second layer, voids between fibrous substances are densely filled with nanofibers, and by virtue of the capillary phenomenon, it is possible to form a layer having high water vapor transmission properties. Moisture is condensed on the base paper surface, permeates from the surface to the back face and is diffused at the back face, resulting in the permeation of moisture. By the existence of nanofibers, at the time of allowing moisture to permeate from the surface to the back face, the movement is more quickly accelerated by the capillary phenomenon, and the water vapor transmission properties are more heightened. Furthermore, by allowing this second layer and the first layer to be stacked with each other, in the case where the second layer that has already had a high surface area by virtue of the existence of nanofibers is brought into contact with air to be supplied/exhausted, as compared with hydrophilic fibers having no nanostructure, moisture can be easily adsorbed. Moreover, since the nanofiber is composed of a thermoplastic polymer material, unlike cellulose, the strength is not greatly lowered at the time of being in a wet state, and the base paper for heat exchange according to the present invention can maintain the dimensional stability of a total heat exchange element, which is stable over a long period of time.

Being made into a stacked structural body including a first layer and a second layer containing nanofibers enables both a high level of gas shielding properties and a high level of water vapor transmission properties to be achieved. A composition of a second layer containing nanofibers is poor in water-squeezability in a papermaking process. When a first layer and a second layer are stacked to be made into a sheet shape, the water-squeezability is improved, and an effect of heightening the productivity is also exerted.

In base paper for heat exchange as a preferred embodiment, in the case where the base paper for heat exchange including nanofibers is defined as 100% by mass, the content ratio of nanofibers is preferably greater than or equal to 0.5% by mass, more preferably greater than or equal to 2.7% by mass, more preferably greater than or equal to 4.5% by mass, further preferably greater than or equal to 5.5% by mass and especially preferably greater than or equal to 6.4% by mass. The content ratio is preferably less than or equal to 65% by mass and more preferably less than or equal to 58% by mass. By allowing the content ratio to be greater than or equal to the above lower limit, it is possible to accelerate the capillary phenomenon and to obtain base paper for heat exchange further excellent in water vapor transmission properties. By increasing the content, it is possible to significantly accelerate the capillary phenomenon and to obtain base paper for heat exchange significantly excellent in water vapor transmission properties. However, when the content is too large, the sheet state on papermaking becomes poor and the productivity is lowered.

In base paper for heat exchange the content ratio of nanofibers in the second layer is greater than or equal to 30% by mass, preferably greater than or equal to 50% by mass, further preferably greater than or equal to 60% by mass and especially preferably greater than or equal to 70% by mass. On the other hand, the content ratio is less than or equal to 80% by mass. By allowing the content ratio to be greater than or equal to the above lower limit, it is possible to accelerate the capillary phenomenon and to obtain base paper for heat exchange further excellent in water vapor transmission properties. By allowing the content to be greater than or equal to a prescribed amount, it is possible to significantly accelerate the capillary phenomenon and to obtain base paper for heat exchange significantly excellent in water vapor transmission properties. On the other hand, when the amount is too large, the sheet state on papermaking becomes poor and the productivity is lowered.

As the second layer contains nanofibers, the lower limit of the Canadian standard freeness of a fibrous substance constituting the second layer is greater than or equal to 400 ml. Moreover, the upper limit of the Canadian standard freeness is less than or equal to 700 ml and preferably less than or equal to 600 ml. By allowing the Canadian standard freeness to be greater than or equal to 400 ml, the filterability at the time of being mixed with nanofibers to be made into a sheet shape is improved, the papermaking properties of the second layer at the time of papermaking for a stacked structural body is enhanced, and as a result, a liner sheet with a high nanofiber-content ratio can be easily obtained. On the other hand, by allowing the Canadian standard freeness to be less than or equal to 700 ml, it is possible to suppress dropping-off of nanofibers from voids between fibrous substances constituting the second layer at the time of papermaking, and it is possible to attain a desired nanofiber-content ratio.

The basis weight of the second layer of the present invention is greater than or equal to 5 g/m$^2$ and preferably greater than or equal to 10 g/m$^2$, and the upper limit thereof is less than or equal to 20 g/m$^2$. By allowing the basis weight to be greater than or equal to the above lower limit, it is possible to enhance the sheet strength of base paper for heat exchange by being made into a sheet shape together with the first layer, and by allowing the basis weight to be less than or equal to the above upper limit, it is possible to suppress the thickness of base paper for heat exchange prepared with a first layer to be stacked therewith and to enhance the heat conductivity and water vapor transmission properties of base paper for heat exchange.

It is preferred that the second layer be porous. At the time when a cross-section of base paper for heat exchange is observed with an SEM, in a square region with a side of 100 $\mu$m, preferably there are 10 or more small holes with an area of a square with a side of 10 $\mu$m or an area smaller than that of the square, more preferably there are 10 or more small holes with an area of a square with a side of 3 $\mu$m or an area smaller than that of the square, and further preferably there are 50 or more small holes. Whereby, voids between fibrous substances can be sufficiently formed in the second layer and high water vapor transmission properties can be exerted when base paper for heat exchange is obtained.

As the production method of base paper for heat exchange of the present invention, it is preferred that substances constituting raw materials for a first layer and a second layer be dispersed in water respectively to form a stacked structural body by multilayer papermaking. Although a stacked structural body can be formed by a method of preparing a first layer and a second layer by being respectively made into sheet shapes and bonded together and the like, this method may cause a resin component of an adhesive frequently used for stacking to inhibit the transmission of heat or moisture as well as allows processes to become complicated. Moreover, in the case of forming a stacked structural body by multilayer papermaking, a desired stacked structural body can be easily obtained by appropriately preparing papermaking sections depending on the number of stacked layers and being made into a sheet shape together. Moreover, as a papermaking machine, a cylinder paper machine having a desired number of papermaking sections, a short wire cloth paper machine, a fourdrinier paper machine, a papermaking machine prepared by combining those machines, and the like can be used.

In particular, in the case of using a mixture of cellulose pulp and nanofibers for the second layer, it is preferred that nanofibers be separated from other constituent fibers such as cellulose pulp to be dispersed. Since the nanofiber has a large aspect ratio (fiber length/fiber diameter) and two different fibers are easily entangled with each other, it is preferred that a dispersing agent, a penetrating agent and the like be used to disperse fibers with a beating machine such as a beater and a refiner. Moreover, it is preferred that respective constituent fibers be mixed and then made into a sheet shape without delay. Moreover, as a papermaking machine, a cylinder paper machine, a short wire cloth paper machine, a fourdrinier paper machine, a papermaking machine prepared by combining those machines, and the like can be used. For the purpose of allowing nanofibers to be uniformly dispersed and disposed in the inside of paper, using a papermaking machine having a dehydration function utilizing suction or the like is preferred because partially uneven distribution of nanofibers can be suppressed in the inside of a paper sheet.

Although the layer constitution of the base paper for heat exchange according to the present invention is not particularly limited as long as the base paper has at least one layer of a first layer and at least one layer of a second layer, from the viewpoint of being capable of enhancing the water vapor transmission properties of the base paper for heat exchange, it is preferred that the layer constitution be a constitution in which two second layers are provided respectively on both sides of a first layer.

For the purpose of enhancing the water vapor transmission properties of the base paper for heat exchange, it is preferred that a moisture absorbent composed of an alkali metal salt such as lithium chloride and calcium chloride be contained in the base paper for heat exchange.

In the case where the base paper for heat exchange in the state of being free from a moisture absorbent is defined as 100% by mass, it is preferred that the content of the moisture absorbent fall within the range of 1 to 30% by mass. Although moisture permeation is accelerated by allowing the hygroscopic material to be contained in a large quantity, there is a tendency for the strength of base paper to be lowered under a high humidity condition. The base paper for heat exchange can be subjected to application such as coating or immersion processing such as dipping to be imparted with the moisture absorbent. Moreover, on that occasion, a binder may be used in combination. Furthermore, simultaneously with the moisture absorbent, the base paper for heat exchange can be imparted with a functional agent such as an antibacterial agent, a bacteriostatic agent and a flame retardant.

The thickness of the base paper for heat exchange is preferably less than or equal to 90 $\mu$m, more preferably less than or equal to 75 $\mu$m and further preferably less than or equal to 65 $\mu$m. The thickness of the base paper for heat exchange is involved in the temperature exchange efficiency of a total heat exchange element, and when the thickness is thick, the base paper is poor in thermal conductivity and there is a tendency for the temperature exchange efficiency to be lowered. Furthermore, by allowing the thickness to be thinned, it is possible to obtain a total heat exchange element with a temperature exchange efficiency of greater than or equal to 80%. On the other hand, the thickness is preferably greater than or equal to 10 $\mu$m. When the thickness is too thin, breakage occurs, wrinkles are generated, and there is a tendency for the formation of a total heat exchange element to become difficult in the case of being processed into an element.

The basis weight of the base paper for heat exchange according to the present invention is preferably greater than or equal to 20 g/m$^2$, more preferably greater than or equal to 25 g/m$^2$ and further preferably greater than or equal to 30 g/m$^2$. Moreover, the basis weight is preferably less than or equal to 90 g/m$^2$, more preferably less than or equal to 60 g/m$^2$ and further preferably less than or equal to 50 g/m$^2$. By allowing the basis weight to be greater than or equal to the above lower limit, the strength of the base paper for heat exchange is enhanced and the forming properties are improved. Moreover, by decreasing the basis weight, since the heat transfer is heightened, and furthermore, the water vapor transmission properties are improved, the temperature exchange efficiency and humidity exchange efficiency can be further enhanced.

The temperature exchange efficiency of the total heat exchange element according to the present invention is preferably greater than or equal to 75%, more preferably greater than or equal to 80% and further preferably greater than or equal to 85%, in an air heating condition. By allowing the total heat exchange element to have a large temperature exchange efficiency, it is possible to provide a ventilating device in which air heating heat in the winter season is hardly lost. In this context, as the air heating condition, the outside air is allowed to have a temperature of 5°C and a humidity of 58%, the return air is allowed to have a temperature of 20°C and a humidity of 51%, and the temperature exchange efficiency is defined as a value measured at an air quantity of 150 m$^3$.

The water vapor permeability of the base paper for heat exchange according to the present invention is preferably greater than or equal to 80 g/m$^2$/hr and more preferably greater than or equal to 90 g/m$^2$/hr. By allowing the water vapor permeability of the base paper for heat exchange to be large, it is possible to obtain a total heat exchange element capable of efficiently transferring moisture from air to be exhausted to air to be supplied.

The water vapor permeability of the base paper for heat exchange is involved in the humidity exchange efficiency when being used as a total heat exchange element, and the higher the water vapor permeability becomes, the higher the humidity exchange efficiency becomes.

The humidity exchange efficiency of the total heat exchange element according to the present invention is preferably greater than or equal to 60%, more preferably greater than or equal to 65% and especially preferably greater than or equal to 70%, in an air cooling condition. By allowing the total heat exchange element to have a humidity exchange efficiency of greater than or equal to 60%, it is possible to provide a ventilating device in which highly humid outside air in the summer season is exchanged by ventilation and the air hardly gives a hot and humid feeling. In this context, as the air cooling condition, the outside air is allowed to have a temperature of 35°C and a humidity of 64%, the return air is allowed to have a temperature of 27°C and a humidity of 52%, and the humidity exchange efficiency is defined as a value measured at an air quantity of 150 m$^3$.

The carbon dioxide shielding rate of the base paper for heat exchange according to the present invention is preferably greater than or equal to 35%. The carbon dioxide shielding rate is more preferably greater than or equal to 60% and further preferably greater than or equal to 70%. When the value is low, in the case of being made into a total heat exchange element, leakage of carbon dioxide through base paper for heat exchange becomes significant. Furthermore, it is preferred that the carbon dioxide shielding rate be greater than or equal to 60%, and furthermore, the carbon dioxide shielding rate be greater than or equal to 70%.

The effective ventilation volume rate that serves as an index for carbon dioxide leakage of the total heat exchange element in the present invention is preferably greater than or equal to 85%, more preferably greater than or equal to 90% and further preferably greater than or equal to 95%. When the effective ventilation volume rate is less than 85%, it is not preferred because a part of foul air leaks from the ventilating device and returns to the inside of the room and it is necessary to excessively ventilate the room.

The method for controlling the density of base paper for heat exchange is not particularly specified, but it is preferred that the base paper for heat exchange be subjected to consolidation with a calender device or a press device in which the base paper for heat exchange is pressed between rolls by means of a pair of rotating rolls or a plurality of rotating rolls. By performing the consolidation, it is possible to make the paper thickness of base paper thin, the heat transfer resistance and the moisture permeation resistance at the time of performing the heat exchange are reduced, and there is an effect that the heat exchange is more easily performed.

The base paper for heat exchange according to the present invention can be suitably used as a total heat exchange element.

A piece of the base paper for heat exchange according to the present invention and a corrugated sheet of central core paper which has a basis weight of 20 to 200 g/m$^2$ and is composed mainly of cellulose and synthetic fibers are bonded together with an adhesive and the like to obtain a piece of single-faced corrugated cardboard. The sheet of central core paper may be previously processed with a flame retardant as necessary. The corrugating processing is performed by means of a device composed of a corrugator with a pair of gears which are engaged with each other to rotate for forming a sheet of central core paper and a press roll pushing a piece of base paper for heat exchange to the corrugated sheet of central core paper. Bonding between a sheet of central core paper and a piece of base paper for heat exchange can also be performed by applying an adhesive on top portions of a corrugated sheet of central core paper and pushing a piece of base paper for heat exchange thereto to be bonded together. Moreover, a sheet of central core paper and a piece of base paper for heat exchange can also be bonded together by allowing an adhesive component to be contained in at least any one thereof and pressing the sheet of central core paper and the piece of base paper for heat exchange with heating.

Furthermore, pieces of single-faced corrugated cardboard are stacked so that corrugated stripe directions of respective adjacent pieces are allowed to cross with each other to prepare a total heat exchange element.

The total heat exchange element is produced by allowing pieces of single-faced corrugated cardboard to be stacked. An adhesive is applied on apexes of mountain-like parts of pieces of single-faced corrugated cardboard, and corrugated stripe directions of plural pieces of single-faced corrugated cardboard are allowed to alternately cross one by one to be stacked. The intersection angle is preferably greater than or equal to 30° and less than or equal to 150°, and more preferably 90°. By allowing corrugated stripe directions of plural pieces of single-faced corrugated cardboard to orthogonally cross with one another, it is possible to reduce the pressure loss at the time of being made into a total heat exchange element. Before being stacked or after being stacked, pieces of single-faced corrugated cardboard can be cut into a desired shape. Moreover, before being stacked or after being stacked, pieces of single-faced corrugated cardboard can be compressed to crush mountain-like parts. By lowering the height of the mountain-like part, it is possible to increase the number of pieces of base paper for heat exchange, and it is possible to further increase the effective area for temperature exchange and humidity exchange.

With regard to the shape of the total heat exchange element, in the case where a face which is parallel to the sheet of base paper for heat exchange and is positioned at the end of a total heat exchange element is defined as its bottom face, it is preferred that the bottom face have a polygonal shape. That is, it is preferred that the total heat exchange element have a polygonal columnar shape. The total heat exchange element more preferably has a quadrangular columnar shape, and examples of a shape of its bottom face include a square shape, a rectangular shape, a parallelogram shape, a trapezoid shape, a rhombic shape and the like.

With regard to the size of one total heat exchange element unit, in the case where a face of the sheet of base paper for heat exchange is defined as its bottom face, the longitudinal or transversal length of the bottom face is preferably greater than or equal to 50 mm, more preferably greater than or equal to 100 mm, further preferably greater than or equal to 200 mm, on the other hand, preferably less than or equal to 2000 mm, more preferably less than or equal to 1000 mm and further preferably less than or equal to 500 mm. Moreover, the height of a stack thereof is preferably greater than or equal to 50 mm, more preferably greater than or equal to 100 mm, further preferably greater than or equal to 200 mm, on the other hand, preferably less than or equal to 2000 mm, more preferably less than or equal to 1000 mm and further preferably less than or equal to 500 mm. When the longitudinal or transversal length or the height of a stack thereof is too long/high, there is a tendency for the pressure loss to become high. Moreover, there is a tendency for the processability at the time of cutting a stacked body to become poor. Moreover, there is a tendency for the workability at the time of installing a total heat exchange element in a heat exchanger to become poor.

The height of the mountain-like part (height of flute) formed by a sheet of central core paper in the corrugated cardboard constituting a total heat exchange element is preferably higher than or equal to 1.0 mm, more preferably higher than or equal to 1.5 mm and further preferably higher than or equal to 2.0 mm. On the other hand, the height is preferably lower than or equal to 4.0 mm, more preferably lower than or equal to 3.5 mm and further preferably lower than or equal to 3.0 mm. In this context, the height of flute refers to a distance between the apex and the bottom side of a mountain-like part.

By allowing the height of flute to be lower than or equal to the above upper limit, in a certain size of a total heat exchange element, it is possible to increase the number of pieces of base paper for heat exchange, and it is possible to further increase the effective area for temperature exchange and humidity exchange. Moreover, by allowing the height of flute to be higher than or equal to the above lower limit, the pressure loss of a total heat exchange element is further lowered and the load on a blower of a heat exchanger is reduced.

Moreover, the distance (pitch) between two adjacent mountain-like parts formed by a sheet of central core paper in the corrugated cardboard constituting a total heat exchange element is preferably greater than or equal to 2.0 mm, more preferably greater than or equal to 2.5 mm and further preferably greater than or equal to 3.0 mm. On the other hand, the pitch is preferably less than or equal to 8.0 mm, more preferably less than or equal to 7.0 mm and further preferably less than or equal to 6.0 mm. In this context, the pitch refers to a distance between the apex of a mountain-like part and the apex of an adjacent mountain-like part. By allowing the pitch to be less than or equal to 8.0 mm, the strength of a total heat exchange element against compression is heightened since the number of mountain-like parts is increased. By allowing the pitch to be greater than or equal to 2.0 mm, the number of mountain-like parts can be decreased, and whereby, it is possible to heighten the temperature exchange efficiency and humidity exchange efficiency since the area on a sheet of base paper for heat exchange to which an adhesive is applied is decreased.

EXAMPLES

Hereinafter, the present invention will be described in detail by reference to examples. Definitions of respective characteristics and measuring methods therefor in the present invention are as follows.

(1) Canadian standard freeness

The Canadian standard freeness was measured in accordance with JIS P8121 (1995) "Canadian Standard freeness testing method".

(2) Carbon dioxide shielding rate

To an opening part (20 cm × 20 cm) of a box with a width of 0.36 m, a length of 0.60 m and a height of 0.36 m ($0.078\ m^3$), a test specimen (25 cm × 25 cm) was attached, carbon dioxide was injected so that the concentration thereof in the box becomes 8,000 ppm, and the carbon dioxide concentration (ppm) inside the box after 1 hour was measured to calculate the carbon dioxide shielding rate (%) by the following equation.

```
Carbon dioxide shielding rate (%) = {(Carbon dioxide

concentration inside box after 1 hour – Carbon dioxide concentration in outside air)/(Initial carbon dioxide

concentration inside box – Carbon dioxide concentration in

outside air)} × 100
```

(3) Water vapor permeability

The water vapor permeability was measured by a method of JIS Z0208 (1976) water vapor transmission rate (dish method). A cup used has a diameter $\phi$ of 60 mm and a depth of 25 mm. As test specimens, five circular pieces with a diameter $\phi$ of 70 mm were collected. The test specimens were treated for 1 hour using a dryer, the temperature of which was set to 80°C, and treated for 1 hour in a constant-temperature and constant-humidity chamber, the temperature and humidity of which were set to 20°C and 65% RH. Next, the test specimen was disposed in the cup containing calcium chloride for water content measurement (available from Wako Pure Chemical Industries, Ltd.), measured for the initial mass (T0), treated for 1 hour, 2 hours, 3 hours, 4 hours and 5 hours in a constant-temperature and constant-humidity chamber, the temperature and humidity of which were set to 20°C and 65% RH, and measured for the mass at the end of each time period (T1, T2, T3, T4 and T5, respectively). The water vapor permeability was determined by the equation below, and an average value of five pieces was defined as the value.

```
Water vapor permeability (g/m²/hr) = {[(T - T0)/T0) + ((T -

T1)/T1) + ((T - T2)/T2) + ((T - T3)/T3) + ((T - T4)/T4) +

((T - T5)/T5)]/5} × 100
```

(4) Thickness

With regard to the thickness, three pieces of the test specimen with a length of 200 mm and a width of 200 mm were collected from portions of a sample different from one another, allowed to stand for 24 hr at a temperature of 20°C and a humidity of 65% RH, and then, measured for thicknesses ($\mu$m) of five points of the center and four corners, respectively, with precision of 1 micron order using a measuring instrument (model type ID-112, available from Mitutoyo Corporation), and an average value thereof was defined as the value.

(5) Basis weight

The basis weight was measured by a method of JIS L1906 (2000) 5.2. Three pieces of the test specimen with a length of 200 mm and a width of 250 mm were collected from portions of a sample different from one another, allowed to stand for 24 hours at a temperature of 20°C and a humidity of 65% RH, and then, weighed for the mass (g), respectively, and an average value thereof was expressed in terms of mass per 1 $m^2$, and the average value of three pieces was defined as the value.

Moreover, with regard to the basis weight of a first layer and the basis weight of a second layer, three pieces of the test specimen with a length of 200 mm and a width of 250 mm were collected from portions made into a sheet shape in respective layers, dried, and then, measured in the same manner as above.

Moreover, the basis weight of base paper for heat exchange is determined from the mass after papermaking, and in the case where agents other than the agent used in a papermaking process (for example, a hygroscopic agent, a flameproofing agent, and the like) are stuck thereto, all of the agents were removed, after which the test specimen was measured in the same manner as above.

(6) Fiber diameter and number average fiber diameter of nanofiber

The number average fiber diameter of a nanofiber was determined as follows. That is, a photograph of an aggregate of nanofibers photographed at 30,000 magnifications by a scanning electron microscope (S-3500N type available from Hitachi, Ltd.) is prepared, and using image processing software (WINROOF), 30 single fibers chosen at random in a sample of 5 mm square are measured for the diameter with precision of the nm unit to the first decimal place, and the measured value is rounded off to the nearest integer. Sampling was performed 10 times in total, the diameter data of respective 30 single fibers were collected to acquire the diameter data of 300 single fibers in total. As the number average fiber diameter, a simple average value obtained by allowing the diameter values of single fibers to be integrated and dividing the integrated value by the total number was used.

(7) Temperature exchange efficiency and humidity exchange efficiency of total heat exchange element

Air to be introduced into a heat exchanger from the outside of a room (outside air), air to be introduced into the heat exchanger from the inside of the room (return air) and air to be supplied from the heat exchanger into the inside of the room (supply air) were measured for the temperature and humidity by a method specified in JIS B8628 (2003) to determine the temperature exchange efficiency and humidity exchange efficiency. In the measurement for the temperature and humidity, the temperature/humidity data logger ("Ondotori" (registered trademark) TR-71Ui available from T&D CORPORATION) was used. With regard to the location of the measurement for the temperature and humidity, the temperature and humidity were measured at a location apart from a total heat exchange element by a distance of 30 cm. With regard to the air to be provided for the measurement, under the air cooling condition where the outside air is allowed to have a temperature of 35°C, a humidity of 64% RH and an air quantity of 150 $m^3$/hr and the return air is allowed to have a temperature of 27°C, a humidity of 52% RH and an air quantity of 150 $m^3$/hr, the humidity exchange efficiency was determined. Moreover, under the air heating condition where the outside air is allowed to have a temperature of 5°C, a humidity of 58% RH and an air quantity of 150 $m^3$/hr and the return air is allowed to have a temperature of 20°C, a humidity of 51% RH and an air quantity of 150 $m^3$/hr, the temperature exchange efficiency was determined.

(8) Effective ventilation volume rate of total heat exchange element

Air to be introduced into a heat exchanger from the inside of a room (return air) was allowed to have a carbon dioxide concentration of 8,000 ppm, and air to be introduced into the heat exchanger from the outside of the room (outside air) and air to be supplied from the heat exchanger into the inside of the room (supply air) were measured for the carbon dioxide concentration by a method specified in JIS B8628 (2003) to determine the effective ventilation volume rate by the equation below. In the measurement for the carbon dioxide concentration, a measuring instrument ("$CO_2$ measuring instrument testo 535" available from Testo AG) was used. With regard to the location of the measurement, the carbon dioxide concentration was measured at a location apart from a total heat exchange element by a distance of 30 cm. With regard to the air to be provided for the measurement, the outside air was allowed to have a temperature of 20°C, a humidity of 50% RH and an air quantity of 150 $m^3$/hr and the return air was allowed to have a temperature of 20°C, a humidity of 50% RH and an air quantity of 150 $m^3$/hr.

$$\text{Effective ventilation volume rate (\%) = (Supply air-side}$$

$$\text{carbon dioxide concentration} - \text{Outside air-side carbon}$$

$$\text{dioxide concentration)/(Return air-side carbon dioxide}$$

$$\text{concentration} - \text{Outside air-side carbon dioxide}$$

$$\text{concentration)} \times 100$$

(9) Sheet strength

Base paper for heat exchange prepared by being made into a sheet shape of a length of 100 m by means of a cylinder paper machine was used to evaluate the sheet strength by a method in a process of forming a total heat exchange element. Base paper produced with one or less time of paper breakage (good productivity) was judged to be "Good". Moreover, base paper produced with two or more times of paper breakage or the case in which base paper for heat exchange of a length of 100 m cannot be obtained due to failures in papermaking with a cylinder paper machine was judged to be "Poor".

(10) Content ratio of nanofiber

Five pieces of the test specimen with a length of 200 mm and a width of 250 mm were collected from portions of a sample different from one another, allowed to stand for 24 hours at a temperature of 20°C and a humidity of 65% RH, and then, weighed for the initial mass (g), respectively. At this time, the initial mass is determined from the mass after papermaking, and in the case where agents other than the agent used in a papermaking process (for example, a hygroscopic agent, a flameproofing agent, and the like) are stuck thereto, all of the agents were removed, after which the test specimen was weighed in the same manner as above.

Next, in an agent that dissolves nanofibers but does not dissolve a fibrous substance (for example, a sodium hydroxide solution in the case where the nanofiber is a polyester-based one, formic acid in the case where the nanofiber is a nylon-based one), the sample was immersed for 24 hours, washed with water, and then, dried. Afterward, the test specimens were allowed to stand for 24 hours at a temperature of 20°C and a humidity of 65% RH, and then, weighed for the mass after treatment (g), respectively. The content ratio of the nanofiber was determined by the equation below, and an average value of five pieces was defined as the value.

$$\text{Content ratio of nanofiber (\%) = Initial mass (g)} -$$

$$\text{Mass after treatment (g)/Initial mass (g)} \times 100$$

[Reference Example 1]

(First layer)

Softwood pulp was dispersed in water and beaten so that the Canadian standard freeness (CSF), which is specified in JIS P8121 (1995), of a first layer becomes a value described in Table 1 by means of a beater, and fibers for a first layer were obtained.

(Second layer)

Softwood pulp was dispersed in water and beaten so that the Canadian standard freeness (CSF), which is specified in JIS P8121 (1995), of a second layer becomes a value described in Table 1 by means of a beater, and cellulose fibers for a second layer were obtained.

(Preparation of base paper for heat exchange)

First layer fibers and second layer fibers obtained as above were prepared at papermaking sections respectively and subjected to multilayer papermaking using a cylinder paper machine, and paper with a total basis weight of 40 g/m$^2$ constituted of a first layer with a basis weight of 30 g/m$^2$ and a second layer with a basis weight of 10 g/m$^2$ was obtained. At this point, a first layer-portion before combined with a second layer-portion was collected. The first layer-portion has a basis weight of 30 g/m$^2$, and the carbon dioxide shielding rate was determined to be 77%.
The paper was added with lithium chloride of 7 g/m$^2$ as a moisture absorbent by impregnation processing, and dried to obtain base paper for heat exchange. In this context, a cross-section of the base paper for heat exchange was observed with an SEM, whereupon there were 12 fine holes of 10 $\mu$m or less square in a square region of 100 $\mu$m square.

(Preparation of total heat exchange element)

Cellulose kraft paper with a basis weight of 60 g/m$^2$, which was separately prepared with the above-mentioned cellulose fibers, as central core paper and base paper for heat exchange were subjected to corrugation processing to obtain single-faced corrugated cardboard with a height of flute of 2 mm and a pitch of flute of 5 mm. Pieces of the above-mentioned single-faced corrugated cardboard were stacked so that corrugated stripe directions of respective two adjacent pieces were allowed to cross with each other to prepare a total heat exchange element of 350 mm in longitudinal length by 350 mm in transversal length by 200 mm in height.
Physical properties of the base paper for heat exchange thus obtained and characteristics of the total heat exchange element prepared therewith are shown in Table 1.

[Reference Example 2]

Aramid fibers ("Kevlar" available from DU PONT-TORAY CO., LTD., 1.7 dtex, 3 mm in length) were beaten so that the Canadian standard freeness (CSF), which is specified in JIS P8121 (1995), of a first layer becomes a value described in Table 1 by means of a pulper and a fiberizer, and a fibrous substance for a first layer was obtained. Base paper for heat exchange and a total heat exchange element were prepared in the same manner as that in Reference Example 1 except that this was used for a fibrous substance for a first layer.
Physical properties of the base paper for heat exchange thus obtained and characteristics of the total heat exchange element prepared therewith are shown in Table 1.

[Example 3]

(Preparation of nanofiber)

Using a twin screw type kneading extruder, 40% by mass of nylon 6 with a melting point of 220°C and 60% by mass of poly-L-lactic acid with a melting point of 170°C (optical purity of 99.5% or more) were melt-kneaded at 220°C by means of a kneading extruder to obtain polymer alloy chips.
The above-mentioned polymer alloy chips were charged into a melt spinning machine for staple fiber provided with a single screw extruder, melted at 235°C and led to a spin block. And then, a polymer alloy melt was filtered through metal nonwoven fabric with an ultrafiltration diameter of 15 $\mu$m, and discharged at a spinning temperature of 235°C from a spinneret that has a discharge hole with a hole diameter of 0.3 mm and allows the temperature on a spinneret face to be set to 215°C. The discharged linear molten polymer was cooled and solidified by cooling air, imparted with an oil solution and withdrawn at a spinning speed of 1350 m/minute. The obtained undrawn yarns were doubled, and then, subjected to a draw heat treatment at a drawing temperature of 90°C, a draw ratio of 3.04 times and a thermosetting temperature of 130°C to obtain tow of polymer alloy fibers with a single filament fineness of 3.0 dtex and a total fineness of five hundred thousand dtex. With regard to the obtained polymer alloy fiber, the strength was determined to be 3.4 cN/dtex and the elongation degree was determined to be 45%. The tow of the above-mentioned polymer alloy fibers was immersed for 1 hour in an aqueous 5% sodium hydroxide solution kept at 95°C to remove the poly-L-lactic acid component that constitutes the sea component in the polymer alloy fiber (remove the sea component) by hydrolysis. Then, the tow was neutralized with acetic acid, washed with water and dried to obtain a fiber bundle of nanofibers, and this fiber bundle was cut into a length of 1 mm. These cut fibers in a concentration of 30 g per 10 L of water were placed in a niagara beater for testing available from KUMAGAI RIKI KOGYO Co., Ltd. and preliminarily beaten for 5 minutes, and the water was drained to recover the fibers. Then, this recovery was placed in an automatic PFI mill (available from KUMAGAI RIKI KOGYO Co., Ltd.) and beaten for 6 minutes under the condition of a rotation number of 1500 rpm and a clearance of 0.2 mm. And then, the recovery formed in a clay-like form by containing water was dried for 24 hours in a hot air dryer at 80°C to obtain nanofibers. The diameter of the obtained nanofiber falls within the range of 110 to 180 nm, and the number average fiber diameter was determined to be 150 nm.

(Second layer)

Into water, 60% by mass of the nylon 6 nanofiber with a number average fiber diameter of 150 nm obtained as above and 40% by mass of a fibrous substance for a second layer obtained in the same manner as that in Reference Example 1 were charged and stirred to prepare a mixture. This was used as a material for a second layer in the present example.

(Base paper for heat exchange and total heat exchange element)

Base paper for heat exchange and a total heat exchange element were prepared in the same manner as that in Reference Example 1 except that the composition of a second layer was set to that described above.
In this context, a cross-section of the base paper for heat exchange was observed with a transmission electron microscope (hereinafter, referred to as "SEM"), whereupon there were 98 fine holes of 3 m or less square in a square region of 100 $\mu$m square.
Physical properties of the base paper for heat exchange thus obtained and characteristics of the total heat exchange element prepared therewith are shown in Table 2.

[Example 4]

(Second layer)

Into water, 5% by mass of a nylon 6 nanofiber with a number average fiber diameter of 150 nm obtained in the same manner as that in Example 3 and 95% by mass of a fibrous substance for a second layer obtained in the same manner as that in Reference Example 1 were charged and stirred to prepare a mixture.
This was used as a material for a second layer in the present example.

(Base paper for heat exchange and total heat exchange element)

Base paper for heat exchange and a total heat exchange element were prepared in the same manner as that in Reference Example 1 except that the composition of a second layer was set to that described above.
Physical properties of the base paper for heat exchange thus obtained and characteristics of the total heat exchange element prepared therewith are shown in Table 2.

[Example 5]

(Second layer)

Into water, 30% by mass of a nylon 6 nanofiber with a number average fiber diameter of 150 nm obtained in the same manner as that in Example 3 and 70% by mass of a fibrous substance for a second layer obtained in the same manner as that in Reference Example 1 were charged and stirred to prepare a mixture. This was used as a material for a second layer in the present example.

EP 3 056 851 B1

(Base paper for heat exchange and total heat exchange element)

Base paper for heat exchange and a total heat exchange element were prepared in the same manner as that in Reference Example 1 except that the composition of a second layer was set to that described above.

Physical properties of the base paper for heat exchange thus obtained and characteristics of the total heat exchange element prepared therewith are shown in Table 2.

[Example 6]

(Second layer)

Into water, 70% by mass of a nylon 6 nanofiber with a number average fiber diameter of 150 nm obtained in the same manner as that in Example 3 and 30% by mass of a fibrous substance for a second layer obtained in the same manner as that in Reference Example 1 were charged and stirred to prepare a mixture. This was used as a material for a second layer in the present example.

(Base paper for heat exchange and total heat exchange element)

Base paper for heat exchange and a total heat exchange element were prepared in the same manner as that in Reference Example 1 except that the composition of a second layer was set to that described above.

Physical properties of the base paper for heat exchange thus obtained and characteristics of the total heat exchange element prepared therewith are shown in Table 2.

[Example 7]

(Preparation of base paper for heat exchange)

A fibrous substance for a first layer obtained in the same manner as that in Reference Example 1 and a material for a second layer obtained in the same manner as that in Example 3 were prepared at papermaking sections respectively and subjected to multilayer papermaking using a cylinder paper machine to obtain base paper for heat exchange with a total basis weight of 35 g/m$^2$ constituted of a first layer with a basis weight of 30 g/m$^2$ and a second layer with a basis weight of 5 g/m$^2$. A total heat exchange element was prepared in the same manner as that in Reference Example 1 except that this was used as base paper for heat exchange.

Physical properties of the base paper for heat exchange thus obtained and characteristics of the total heat exchange element prepared therewith are shown in Table 3.

[Example 8]

(Preparation of base paper for heat exchange)

A fibrous substance for a first layer obtained in the same manner as that in Reference Example 1 and a material for a second layer obtained in the same manner as that in Example 3 were prepared at papermaking sections respectively, and multilayer papermaking was performed using a cylinder paper machine. And then, base paper for heat exchange with a total basis weight of 50 g/m$^2$ constituted of a first layer with a basis weight of 30 g/m$^2$ and a second layer with a basis weight of 20 g/m$^2$ was obtained. A total heat exchange element was prepared in the same manner as that in Reference Example 1 except that this was used as base paper for heat exchange.

Physical properties of the base paper for heat exchange thus obtained and characteristics of the total heat exchange element prepared therewith are shown in Table 3.

[Reference Example 9]

(Preparation of base paper for heat exchange)

A fibrous substance for a first layer obtained in the same manner as that in Reference Example 1 and a material for a second layer obtained in the same manner as that in Example 3 were prepared at papermaking sections respectively, and multilayer papermaking was performed using a cylinder paper machine. And then, base paper for heat exchange with a total basis weight of 60 g/m$^2$ constituted of a first layer with a basis weight of 30 g/m$^2$ and a second layer with a basis weight of 30 g/m$^2$ was obtained. A total heat exchange element was prepared in the same manner as that in Reference Example 1 except that this was used as base paper for heat exchange.

Physical properties of the base paper for heat exchange thus obtained and characteristics of the total heat exchange element prepared therewith are shown in Table 3.

[Reference Example 10]

(First layer)

Softwood pulp was dispersed in water and beaten so that the Canadian standard freeness (CSF), which is specified in JIS P8121 (1995), of a first layer becomes a value described in Table 4 by means of a beater, and fibers for a first layer were obtained.

(Base paper for heat exchange and total heat exchange element)

A fibrous substance for a first layer obtained in the same manner as that in Reference Example 1 and a material for a second layer obtained in the same manner as that in Example 3 were prepared at papermaking sections respectively and subjected to multilayer papermaking using a cylinder paper machine to obtain base paper for heat exchange with a total basis weight of 40 g/m² constituted of a first layer with a basis weight of 30 g/m² and a second layer with a basis weight of 10 g/m². A total heat exchange element was prepared in the same manner as that in Reference Example 1 except that this was used as base paper for heat exchange.

At this point, a first layer-portion before combined with a second layer-portion was collected. The first layer-portion has a basis weight of 30 g/m², and the carbon dioxide shielding rate was determined to be 51%.

Physical properties of the base paper for heat exchange thus obtained and characteristics of the total heat exchange element prepared therewith are shown in Table 4.

[Example 11]

A fibrous substance for a first layer obtained in the same manner as that in Reference Example 1 and a material for a second layer obtained in the same manner as that in Example 3 were prepared at papermaking sections respectively, and multilayer papermaking was performed using a cylinder paper machine. And then, base paper for heat exchange with a total basis weight of 38 g/m² constituted of a first layer with a basis weight of 28 g/m² and a second layer with a basis weight of 10 g/m² was obtained. A total heat exchange element was prepared in the same manner as that in Reference Example 1 except that this was used as base paper for heat exchange.

Physical properties of the base paper for heat exchange thus obtained and characteristics of the total heat exchange element prepared therewith are shown in Table 4.

[Example 12]

A fibrous substance for a first layer obtained in the same manner as that in Reference Example 1 and a material for a second layer obtained in the same manner as that in Example 3 were prepared at papermaking sections respectively, and multilayer papermaking was performed using a cylinder paper machine. And then, base paper for heat exchange with a total basis weight of 36 g/m² constituted of a first layer with a basis weight of 26 g/m² and a second layer with a basis weight of 10 g/m² was obtained. A total heat exchange element was prepared in the same manner as that in Reference Example 1 except that this was used as base paper for heat exchange.

Physical properties of the base paper for heat exchange thus obtained and characteristics of the total heat exchange element prepared therewith are shown in Table 4.

[Reference Example 13]

A fibrous substance for a first layer obtained in the same manner as that in Reference Example 1 and a material for a second layer obtained in the same manner as that in Example 3 were prepared at papermaking sections respectively, and multilayer papermaking was performed using a cylinder paper machine. And then, base paper for heat exchange with a total basis weight of 24 g/m² constituted of a first layer with a basis weight of 14 g/m² and a second layer with a basis weight of 10 g/m² was obtained. A total heat exchange element was prepared in the same manner as that in Reference Example 1 except that this was used as base paper for heat exchange.

Physical properties of the base paper for heat exchange thus obtained and characteristics of the total heat exchange element prepared therewith are shown in Table 4.

[Example 14]

(Base paper for heat exchange and total heat exchange element)

A fibrous substance for a first layer obtained in the same manner as that in Reference Example 1 and a material for a second layer obtained in the same manner as that in Example 3 were prepared at papermaking sections respectively, and multilayer papermaking was performed using a cylinder paper machine. And then, base paper for heat exchange with a total basis weight of 27 $g/m^2$ constituted of a first layer with a basis weight of 17 $g/m^2$ and a second layer with a basis weight of 10 $g/m^2$ was obtained. A total heat exchange element was prepared in the same manner as that in Reference Example 1 except that this was used as base paper for heat exchange.
Physical properties of the base paper for heat exchange thus obtained and characteristics of the total heat exchange element prepared therewith are shown in Table 4.

[Example 15]

(Base paper for heat exchange and total heat exchange element)

A fibrous substance for a first layer obtained in the same manner as that in Reference Example 1 and a mixture of a nylon 6 nanofiber and cellulose pulp as a material for a second layer were used. A material for a second layer, a fibrous substance for a first layer defined as above and a material for a second layer were prepared at three papermaking sections respectively so that base paper has a stack of layers in this order, and subjected to multilayer papermaking using a cylinder paper machine to be sequentially made into a sheet shape to obtain base paper for heat exchange having a three-layer structure with a total basis weight of 42 $g/m^2$ constituted of an upper face side second layer with a basis weight of 7 $g/m^2$, a first layer with a basis weight of 28 $g/m^2$ and a lower face side second layer with a basis weight of 7 $g/m^2$. A total heat exchange element was prepared in the same manner as that in Reference Example 1 except that this was used as base paper for heat exchange.
Physical properties of the base paper for heat exchange thus obtained and characteristics of the total heat exchange element prepared therewith are shown in Table 4.

[Example 16]

(First layer)

Softwood pulp was dispersed in water and beaten so that the Canadian standard freeness (CSF), which is specified in JIS P8121 (1995), of a first layer becomes a value described in Table 3 by means of a beater, and a fibrous substance for a first layer was obtained.

(Base paper for heat exchange and total heat exchange element)

A fibrous substance for a first layer obtained as above and a material for a second layer obtained in the same manner as that in Example 3 were prepared at papermaking sections respectively, and multilayer papermaking was performed using a cylinder paper machine. And then, base paper for heat exchange with a total basis weight of 40 $g/m^2$ constituted of a first layer with a basis weight of 30 $g/m^2$ and a second layer with a basis weight of 10 $g/m^2$ was obtained. A total heat exchange element was prepared in the same manner as that in Reference Example 1 except that this was used as base paper for heat exchange. At this point, a first layer-portion before combined with a second layer-portion was collected. The first layer-portion has a basis weight of 30 $g/m^2$, and the carbon dioxide shielding rate was determined to be 71%.
Physical properties of the base paper for heat exchange thus obtained and characteristics of the total heat exchange element prepared therewith are shown in Table 3.

[Example 17]

(Base paper for heat exchange and total heat exchange element)

A fibrous substance for a first layer and a material for a second layer obtained in the same manner as that in Example 16 were prepared at papermaking sections respectively and subjected to multilayer papermaking using a cylinder paper machine to obtain base paper for heat exchange with a total basis weight of 50 $g/m^2$ constituted of a first layer with a basis weight of 40 $g/m^2$ and a second layer with a basis weight of 10 $g/m^2$. A total heat exchange element was prepared in the same manner as that in Reference Example 1 except that this was used as base paper for heat exchange.

At this point, a first layer-portion before combined with a second layer-portion was collected. The first layer-portion has a basis weight of 30 g/m$^2$, and the carbon dioxide shielding rate was determined to be 84%.

Physical properties of the base paper for heat exchange thus obtained and characteristics of the total heat exchange element prepared therewith are shown in Table 3.

[Reference Example 18]

(Base paper for heat exchange and total heat exchange element)

A fibrous substance for a first layer and a material for a second layer obtained in the same manner as that in Example 16 were prepared at papermaking sections respectively and subjected to multilayer papermaking using a cylinder paper machine to obtain base paper for heat exchange with a total basis weight of 60 g/m$^2$ constituted of a first layer with a basis weight of 50 g/m$^2$ and a second layer with a basis weight of 10 g/m$^2$. A total heat exchange element was prepared in the same manner as that in Reference Example 1 except that this was used as base paper for heat exchange.

At this point, a first layer-portion before combined with a second layer-portion was collected. The first layer-portion has a basis weight of 30 g/m$^2$, and the carbon dioxide shielding rate was determined to be 89%.

Physical properties of the base paper for heat exchange thus obtained and characteristics of the total heat exchange element prepared therewith are shown in Table 3.

[Comparative Example 1]

(First layer)

Softwood pulp was dispersed in water and beaten so that the Canadian standard freeness (CSF), which is specified in JIS P8121 (1995), of a first layer becomes a value described in Table 1 by means of a refiner, and a fibrous substance for a first layer was obtained.

(Base paper for heat exchange and total heat exchange element)

Only a fibrous substance for a first layer obtained as above was prepared at a papermaking section and subjected to single-layer papermaking using a cylinder paper machine to obtain base paper with a total basis weight of 30 g/m$^2$ constituted of a first layer with a basis weight of 30 g/m$^2$.

Lithium chloride as a moisture absorbent was attempted to be applied thereonto by impregnation processing, whereupon paper breakage occurred frequently (occurred two or more times) on processing, and a total heat exchange element failed to be obtained.

[Comparative Example 2]

(Base paper for heat exchange and total heat exchange element)

A fibrous substance for a first layer obtained in the same manner as that in Comparative Example 1 was subjected to single-layer papermaking using a cylinder paper machine to be made into a sheet shape to obtain base paper for heat exchange with a total basis weight of 40 g/m$^2$ constituted of a first layer with a basis weight of 40 g/m$^2$. A total heat exchange element was prepared in the same manner as that in Reference Example 1 except that this was used as base paper for heat exchange.

Physical properties of the base paper for heat exchange thus obtained and characteristics of the total heat exchange element prepared therewith are shown in Table 1.

[Comparative Example 3]

(Second layer)

Softwood pulp was dispersed in water and beaten so that the Canadian standard freeness (CSF), which is specified in JIS P8121 (1995), of a second layer becomes a value described in Table 1, and a fibrous substance for a second layer was obtained.

(Base paper for heat exchange and total heat exchange element)

Only a fibrous substance for a second layer obtained as above was prepared at a papermaking section and subjected to multilayer papermaking using a cylinder paper machine, and base paper with a total basis weight of 10 g/m$^2$ constituted of a second layer with a basis weight of 10 g/m$^2$ was attempted to be obtained, whereupon paper breakage occurred, and base paper for heat exchange failed to be obtained.

[Comparative Example 4]

(Base paper for heat exchange and total heat exchange element)

A fibrous substance for a second layer obtained in the same manner as that in Comparative Example 3 was subjected to single-layer papermaking using a cylinder paper machine to be made into a sheet shape to obtain base paper for heat exchange with a total basis weight of 40 g/m$^2$ constituted of a second layer with a basis weight of 40 g/m$^2$. A total heat exchange element was prepared in the same manner as that in Reference Example 1 except that this was used as base paper for heat exchange.
Physical properties of the base paper for heat exchange thus obtained and characteristics of the total heat exchange element prepared therewith are shown in Table 1.

[Comparative Example 5]

(Second layer)

Into water, 60% by mass of a nylon 6 nanofiber with a number average fiber diameter of 150 nm obtained in the same manner as that in Example 3 and 40% by mass of a fibrous substance for a second layer obtained in the same manner as that in Reference Example 1 were charged and stirred to prepare mixed fibers. Base paper for heat exchange was attempted to be obtained in the same manner as that in Comparative Example 3 except that these were used as a material for a second layer and the basis weight was set to 10 g/m$^2$, whereupon paper breakage occurred, and base paper for heat exchange failed to be obtained.

[Comparative Example 6]

(Second layer)

Into water, 60% by mass of a nylon 6 nanofiber with a number average fiber diameter of 150 nm obtained in the same manner as that in Example 3 and 40% by mass of a fibrous substance for a second layer obtained in the same manner as that in Reference Example 1 were charged and stirred to prepare a material for a second layer. Base paper for heat exchange and a total heat exchange element were prepared in the same manner as that in Comparative Example 4 except that this was used as a material for a second layer and the basis weight was set to 40 g/m$^2$.
Physical properties of the base paper for heat exchange thus obtained and characteristics of the total heat exchange element prepared therewith are shown in Table 2.

[Comparative Example 7]

(First layer)

Softwood pulp was dispersed in water and beaten so that the Canadian standard freeness (CSF), which is specified in JIS P8121 (1995), of a first layer becomes a value described in Table 4 by means of a refiner to obtain a fibrous substance for a first layer.

(Base paper for heat exchange and total heat exchange element)

Base paper for heat exchange and a total heat exchange element were prepared in the same manner as that in Example 3 except that the composition of a first layer was set to that described above.
Physical properties of the base paper for heat exchange thus obtained and characteristics of the total heat exchange element prepared therewith are shown in Table 4.

[Table 1]

In Table 1, Examples 1 and 2 are Reference Examples.

[Table 1]

| | | Example 1 | Example 2 | Comparative Example 1 | Comparative Example 2 | Comparative Example 3 | Comparative Example 4 |
|---|---|---|---|---|---|---|---|
| Constitution of base paper | First layer | CP: 100% | AF: 100% | CP: 100% | CP: 100% | - | - |
| | Second layer | CP: 100% | CP: 100% | - | - | CP: 100% | CP: 100% |
| Canadian standard freeness (ml) | First layer | 90 | 80 | 90 | 90 | - | - |
| | Second layer (only CP) | 400 (CP) | 400 (CP) | - | - | 400 (CP) | 400 (CP) |
| Basis weight (g/m²) | First layer | 30 | 30 | 30 | 40 | - | - |
| | Second layer | 10 | 10 | - | - | 10 | 40 |
| Thickness ($\mu$m) | | 61 | 62 | - | 60 | - | 62 |
| Water vapor permeability (g/m²/hr) | | 81 | 81 | - | 75 | - | 83 |
| Sheet strength | | Good | Good | Poor | Good | Poor | Good |
| Carbon dioxide shielding rate (%) | | 77 | 51 | - | 99 | - | 27 |
| Effective ventilation volume rate (%) | | 96 | 87 | - | 98 | - | 79 |
| Temperature exchange efficiency (%) (Air heating condition) | | 81 | 82 | - | 80 | - | 80 |
| Humidity exchange efficiency (%) (Air cooling condition) | | 64 | 64 | - | 59 | - | 65 |

CP: cellulose pulp
AF: aramid fiber

[Table 2]

[Table 2]

| | | Example 3 | Example 4 | Example 5 | Example 6 | Comparative Example 5 | Comparative Example 6 |
|---|---|---|---|---|---|---|---|
| Constitution of base paper | First layer | CP: 100% | CP: 100% | CP: 100% | CP: 100% | - | - |
| | Second layer | CP: 40%/N-NF: 60% | CP: 95%/N-NF: 5% | CP: 70%/N-NF: 30% | CP: 30%/N-NF: 70% | CP: 40%/N-NF: 60% | CP: 40%/N-NF: 60% |
| Canadian standard freeness (ml) | First layer | 90 | 90 | 90 | 90 | - | - |
| | Second layer (only CP) | 400 (CP) | 400 (CP) | 400 (CP) | 400 (CP) | 400 (CP) | 400 (CP) |
| Basis weight (g/m$^2$) | First layer | 30 | 30 | 30 | 30 | - | - |
| | Second layer | 10 | 10 | 10 | 10 | 10 | 33 |
| Thickness ($\mu$m) | | 55 | 62 | 57 | 55 | - | 45 |
| Water vapor permeability (g/m$^2$/hr) | | 91 | 84 | 86 | 93 | - | 96 |
| Sheet strength | | Good | Good | Good | Good | Poor | Good |
| Carbon dioxide shielding rate (%) | | 76 | 78 | 76 | 75 | - | 7 |
| Effective ventilation volume rate (%) | | 95 | 96 | 96 | 94 | - | 68 |
| Temperature exchange efficiency (%) (Air heating condition) | | 83 | 81 | 82 | 83 | - | 84 |
| Humidity exchange efficiency (%) (Air cooling condition) | | 72 | 67 | 70 | 73 | - | 76 |
| CP: cellulose pulp<br>N-NF: nylon 6 nanofiber | | | | | | | |

[Table 3]

In Table 3, Examples 9 and 18 are Reference Examples.

[Table 3]

| | | Example 7 | Example 8 | Example 9 | Example 16 | Example 17 | Example 18 |
|---|---|---|---|---|---|---|---|
| Constitution of base paper | First layer | CP: 100% | CP: 100% | CP: 100% | CP: 100% | CP: 100% | CP: 100% |
| | Second layer | CP: 40%/N-NF: 60% | CP: 40%/N-NF: 60% | CP: 40%/N-NF: 60% | CP: 40%/N-NF: 60% | CP: 40%/N-NF: 60% | CP: 40%/N-NF: 60% |
| Canadian standard freeness (ml) | First layer | 90 | 90 | 90 | 100 | 100 | 100 |
| | Second layer (only CP) | 400 (CP) | 400 (CP) | 400 (CP) | 400 (CP) | 400 (CP) | 400 (CP) |
| Basis weight (g/m²) | First layer | 30 | 30 | 30 | 30 | 40 | 50 |
| | Second layer | 5 | 20 | 30 | 10 | 10 | 10 |
| Thickness (μm) | | 49 | 68 | 82 | 55 | 66 | 79 |
| Water vapor permeability (g/m²/hr) | | 93 | 90 | 83 | 94 | 83 | 77 |
| Sheet strength | | Good | Good | Good | Good | Good | Good |
| Carbon dioxide shielding rate (%) | | 75 | 77 | 77 | 71 | 84 | 89 |
| Effective ventilation volume rate (%) | | 96 | 96 | 97 | 95 | 96 | 97 |
| Temperature exchange efficiency (%) (Air heating condition) | | 84 | 81 | 74 | 84 | 79 | 75 |
| Humidity exchange efficiency (%) (Air cooling condition) | | 73 | 70 | 66 | 73 | 65 | 60 |
| CP: cellulose pulp N-NF: nylon 6 nanofiber | | | | | | | |

[Table 4]

In Table 4, Examples 10 and 13 are Reference Examples.

[Table 4]

| | | Example 10 | Example 11 | Example 12 | Example 13 | Example 14 | Example 15 | Comparative Example 7 |
|---|---|---|---|---|---|---|---|---|
| Constitution of base paper | First layer | CP: 100% | CP: 100% | CP: 100% | CP: 100% | CP: 100% | CP: 100% | CP: 100% |
| | Second layer | CP: 40%/N-nF: 60% | CP: 40%/N-NF: 60% | CP: 40%/N-NF: 60% | CP: 40%/N-NF: 60% | CP: 40%/N-HF: 60% | CP: 40%/N-NF: 60% | CP: 40%/N-NF: 60% |
| Canadian standard freeness (ml) | First layer | 140 | 90 | 90 | 90 | 30 | 80 | 160 |
| | Second layer (only CP) | 400 (CP) | 400 (CP) | 400 (CP) | 400 (CP) | 400 (CP) | 400 (CP) | 400 (CP) |
| Basis weight (g/m$^2$) | First layer | 30 | 28 | 26 | 14 | 17 | 28 | 30 |
| | Second layer | 10 | 10 | 10 | 10 | 10 | 7/7 | 10 |
| Thickness ($\mu$m) | | 55 | 52 | 50 | 35 | 38 | 57 | 55 |
| Water vapor permeability (g/m$^2$/hr) | | 93 | 91 | 93 | 94 | 90 | 95 | 93 |
| Sheet strength | | Good | Good | Good | Good | Good | Good | Good |
| Carbon dioxide shielding rate (%) | | 51 | 73 | 53 | 31 | 63 | 72 | 25 |
| Effective ventilation volume rate (%) | | 68 | 95 | 89 | 60 | 92 | 94 | 76 |
| Temperature exchange efficiency (%) (Air heating condition) | | 83 | 83 | 84 | 86 | 86 | 82 | 84 |
| Humidity exchange efficiency (%) (Air cooling condition) | | 74 | 73 | 74 | 73 | 72 | 74 | 73 |
| CP: cellulose pulp<br>N-NF: nylon 6 nanofiber | | | | | | | | |

As shown in Tables 1 to 4, in Reference Examples 1, 2, 9, 10, 13 and 18 and Examples 3 to 8, 11, 12 and 14 to 17, the base paper for heat exchange has high carbon dioxide shielding rate and is excellent in gas shielding properties as compared with Comparative Examples 1 to 7, and as a result, the heat exchanger is excellent in effective ventilation volume rate which serves as an index for indicating contamination with undesired foul air. Furthermore, the heat exchanger exhibits high water vapor transmission properties while securing high effective ventilation volume rate as compared with Comparative Example 2, and as a result, the heat exchanger has excellent humidity exchange efficiency. Moreover, as a result of adopting the stacked structure, as compared with Comparative Examples 1 and 4, it is possible to impart sheet strength required for the post-processing and formation of a total heat exchange element to base paper for heat exchange.

**Claims**

1.  Base paper for heat exchange, comprising at least one layer of a first layer containing greater than or equal to 90% by mass of cellulose pulp with a Canadian standard freeness specified in JIS P8121 (1995) of 10 to 100 ml and at least one layer of a second layer having a fibrous substance comprising cellulose pulp with a Canadian standard freeness specified in JIS P8121 (1995) of 400 to 700 ml, and having a stacked structure thereof, wherein the first layer has a basis weight of 15 to 40 g/m$^2$, the second layer has a basis weight of 5 to 20 g/m$^2$, and the second layer includes nanofibers of a thermoplastic polymer in an amount of 30 to 80% by mass based on the second layer.

2.  The base paper for heat exchange according to claim 1, wherein the carbon dioxide shielding rate of the base paper for heat exchange is greater than or equal to 35%.

3.  The base paper for heat exchange according to claim 1 or 2, wherein the second layer is a porous layer.

4.  The base paper for heat exchange according to any of claims 1 to 3, wherein the main component of the thermoplastic polymer constituting nanofibers is a polyamide.

5.  The base paper for heat exchange according to any of claims 1 to 4, wherein the content ratio of nanofibers of a thermoplastic polymer existing in the second layer to the base paper for heat exchange is 0.5 to 65% by mass.

6.  The base paper for heat exchange according to any one of claims 1 to 5, further comprising a moisture absorbent.

7.  The base paper for heat exchange according to any one of claims 1 to 6, wherein the basis weight of the base paper for heat exchange is 20 to 90 g/m$^2$.

8.  The base paper for heat exchange according to any one of claims 1 to 7, wherein the water vapor permeability of the base paper for heat exchange is greater than or equal to 80 g/m$^2$/hr.

9.  The base paper for a heat exchange element according to any one of claims 1 to 8, wherein second layers exist in respective directions of both faces of the first layer.

10. A total heat exchange element prepared by stacking pieces of a corrugated cardboard prepared with the base paper for a heat exchange element according to any one of claims 1 to 9.

**Patentansprüche**

1.  Basispapier für den Wärmeaustausch, umfassend mindestens eine Schicht einer ersten Schicht, die 90 Massen-% Zellulosepulpe oder mehr mit einer in JIS P8121 (1995) spezifizierten Canadian-Standard-Freeness von 10 bis 100 ml enthält und mindestens eine Schicht einer zweiten Schicht mit einer faserigen Substanz, umfassend Zellulosepulpe mit einer in JIS P8121 (1995) spezifizierten Canadian-Standard-Freeness von 400 bis 700 ml, und das eine gestapelten Struktur davon hat; wobei die erste Schicht ein Flächengewicht von 15 bis 40 g/m$^2$ hat, die zweite Schicht ein Flächengewicht von 5 bis 20 g/m$^2$ hat, und die zweite Schicht Nanofasern eines thermoplastischen Polymers in einer Menge von 30 bis 80 Massen-% basierend auf der zweiten Schicht enthält.

**2.** Basispapier zum Wärmeaustausch nach Anspruch 1, wobei die Kohlendioxidabschirmrate des Basispapiers zum Wärmeaustausch größer oder gleich 35% ist.

**3.** Basispapier zum Wärmeaustausch nach Anspruch 1 oder 2, wobei die zweite Schicht eine poröse Schicht ist.

**4.** Basispapier zum Wärmeaustausch nach einem der Ansprüche 1 bis 3, wobei die Hauptkomponente des thermoplastischen Polymers, das Nanofasern bildet, ein Polyamid ist.

**5.** Basispapier zum Wärmeaustausch nach einem der Ansprüche 1 bis 4, wobei das Gehaltsverhältnis von Nanofasern eines in der zweiten Schicht vorhandenen thermoplastischen Polymers zu dem Basispapier zum Wärmeaustausch 0,5 bis 65 Massen-% beträgt.

**6.** Basispapier zum Wärmeaustausch nach einem der Ansprüche 1 bis 5, ferner umfassend ein Feuchtigkeitsabsorptionsmittel.

**7.** Basispapier zum Wärmeaustausch nach einem der Ansprüche 1 bis 6, wobei das Flächengewicht des Basispapiers zum Wärmeaustausch 20 bis 90 g/m$^2$ beträgt.

**8.** Basispapier zum Wärmeaustausch nach einem der Ansprüche 1 bis 7, wobei die Wasserdampfdurchlässigkeit des Basispapiers zum Wärmeaustausch größer oder gleich 80 g/m$^2$/h ist.

**9.** Basispapier für ein Wärmeaustauschelement nach einem der Ansprüche 1 bis 8, wobei zweite Schichten in jeweiligen Richtungen beider Seiten der ersten Schicht existieren.

**10.** Gesamtwärmeaustauschelement, hergestellt durch Stapeln von Stücken einer Wellpappe, die mit dem Basispapier für ein Wärmeaustauschelement nach einem der Ansprüche 1 bis 9 hergestellt wurde.

**Revendications**

**1.** Papier de base pour échange de chaleur, comprenant au moins une couche d'une première couche contenant 90% en masse ou plus de pâte de cellulose avec un indice d'égouttage Canadien standard spécifié dans JIS P8121 (1995) allant de 10 à 100 ml et au moins une couche d'une deuxième couche ayant une substance fibreuse comprenant de la pâte de cellulose avec un indice d'égouttage Canadien standard spécifié dans JIS P8121 (1995) allant de 400 à 700 ml, et ayant une structure empilée de celles-ci,
dans lequel la première couche a un poids de base allant de 15 à 40 g/m$^2$, la deuxième couche a un poids de base allant de 5 à 20 g/m$^2$, et la deuxième couche comporte des nanofibres d'un polymère thermoplastique en une quantité allant de 30 à 80% en masse sur la base de la deuxième couche.

**2.** Papier de base pour échange de chaleur selon la revendication 1, dans lequel le taux de protection contre le dioxyde de carbone du papier de base pour échange de chaleur est supérieur ou égal à 35%.

**3.** Papier de base pour échange de chaleur selon la revendication 1 ou 2, dans lequel la deuxième couche est une couche poreuse.

**4.** Papier de base pour échange de chaleur selon l'une des revendications 1 à 3, dans lequel le composant principal du polymère thermoplastique constituant les nanofibres est un polyamide.

**5.** Papier de base pour échange de chaleur selon l'une des revendications 1 à 4, dans lequel le rapport de teneur des nanofibres d'un polymère thermoplastique existant dans la deuxième couche sur le papier de base pour échange de chaleur est de 0,5 à 65% en masse.

**6.** Papier de base pour échange de chaleur selon l'une quelconque des revendications 1 à 5, comprenant en outre un absorbant d'humidité.

**7.** Papier de base pour échange de chaleur selon l'une quelconque des revendications 1 à 6, dans lequel le poids de base du papier de base pour échange de chaleur est de 20 à 90 g/m$^2$.

**8.** Papier de base pour échange de chaleur selon l'une quelconque des revendications 1 à 7, dans lequel la perméabilité à la vapeur d'eau du papier de base pour échange de chaleur est supérieure ou égale à 80 g/m$^2$/h.

**9.** Papier de base pour un élément d'échange de chaleur selon l'une quelconque des revendications 1 à 8, dans lequel des deuxièmes couches existent dans des directions respectives des deux faces de la première couche.

**10.** Élément d'échange de chaleur total préparé par empilement de morceaux d'un carton ondulé préparé avec le papier de base pour un élément d'échange de chaleur selon l'une quelconque des revendications 1 à 9.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010248680 A
- JP 2003148892 A
- JP 7190666 A
- JP 11189999 A
- JP 2005325473 A
- US 2013233529 A1
- EP 1702182 A
- JP 2005299069 A